## Europäisches Patentamt
## European Patent Office
## Office européen des brevets

(19)

(11) Numéro de publication: **0 104 193**
**B1**

(12)

# FASCICULE DE BREVET EUROPEEN

(45) Date de publication du fascicule du brevet:
**26.02.86**

(51) Int. Cl.⁴: **H 02 H 9/04**

(21) Numéro de dépôt: **83900934.7**

(22) Date de dépôt: **21.03.83**

(86) Numéro de dépôt international:
**PCT/FR 83/00054**

(87) Numéro de publication internationale:
**WO 83/03500 (13.10.83 Gazette 83/24)**

---

(54) **DISPOSITIF ISOLE DE TRANSMISSION D'INFORMATION BINAIRE PAR LIGNE ELECTRIQUE.**

---

(30) Priorité: **22.03.82 FR 8205053**

(43) Date de publication de la demande:
**04.04.84 Bulletin 84/14**

(45) Mention de la délivrance du brevet:
**26.02.86 Bulletin 86/9**

(84) Etats contractants désignés:
**AT BE CH DE GB LI LU NL SE**

(56) Documents cités:
**FR - A - 2 386 175**
**FR - A - 2 393 454**
**US - A - 4 009 419**

(73) Titulaire: **BERDANOS, Guy, 25 Avenue de Romans, F-38360 Sassenage (FR)**

(72) Inventeur: **BERDANOS, Guy, 25 Avenue de Romans, F-38360 Sassenage (FR)**

(74) Mandataire: **Pascaud, Claude, PECHINEY 28, rue de Bonnel, F-69433 Lyon Cedex 3 (FR)**

---

LIBER, STOCKHOLM 1986

## Description

La présente invention concerne les systèmes de protection contre les surtensions, des dispositifs de transmission, par ligne électrique, d'information binaire.

Dans ces dispositifs, l'information se traduit, à l'émission ou à la reception, par l'ouverture ou la fermeture d'un relais. Les installations associées se trouvant alors connectées à la ligne, leur fonctionnement peut être gravement endommagé, en cas de brusque variation du potentiel de celle-ci.

Si la foudre frappe un point quelconque de la ligne, ou même si elle tombe à proximité, elle occasionne une onde de surtension qui se propage, du point atteint aux deux extrémités.

Les installations raccordées peuvent être à leur tour atteintes par cette surtension, et d'importants dommages peuvent être causés.

Pour ce type d'installation, des prises de terre peuvent être adaptées pour assurer l'écoulement du courant. Cette sécurité reste insuffisante, du fait de l'impédance que présentent toujours ces prises de terre. Lorsque la foudre frappe une seule des installations, cela peut provoquer une hausse momentanée du potentiel de l'installation. Une différence de potentiel se produit alors entre la ligne et l'installation.

On a également proposé (FR-A-2 393 454) de coupler la ligne de transmission au récepteur par l'intermédiaire d'un transformateur agencé de façon telle que son circuit magnétique se sature sous l'effet d'une surtension brusque sur son primaire, ce qui a pour effet de réduire l'énergie transmise, par le secondaire, vers l'équipement à protéger.

L'objet de l'invention est un dispositif de transmission d'informations binaires, protégé contre les surtensions dues en particulier à la foudre et comportant une ligne électrique de transmission d'information, un émetteur et un récepteur, réliés à la ligne par un transformateur, et un relais de mise en court-circuit ou d'ouverture de la ligne, l'émetteur et le récepteur étant isolés par rapport à la ligne et aux installations pour supporter des tensions allant jusqu'à 100 KV.

Selon l'invention, l'émetteur est constitué par un premier oscillateur commandé par l'information binaire à transmettre, un premier transformateur d'isolement dont le circuit primaire est alimenté par l'oscillateur, et un relais alimenté par le circuit secondaire de ce premier transformateur d'isolement et dont un contact permet l'ouverture ou la mise en court-circuit de la ligne.

Le récepteur comprend un second transformateur d'isolement, dont le circuit secondaire est relié à la ligne de transmission, un second oscillateur alimentant en permanence le circuit primaire du second transformateur d'isolement, et un circuit de détection de seuil de courant réagissant au courant dans le circuit primaire du second transformateur d'isolement et commandant un relais, le second transformateur ayant un couplage primaire-secondaire suffisant pour que l'impédance du primaire varie quand la ligne reliée au secondaire est court-circuitée.

Dans de telles conditions, le potentiel de la ligne est indifférent. On peut ou non la relier à la terre.

Des formes de réalisation particulièrement avantageuses de l'invention sont indiquées dans les revendications dépendantes.

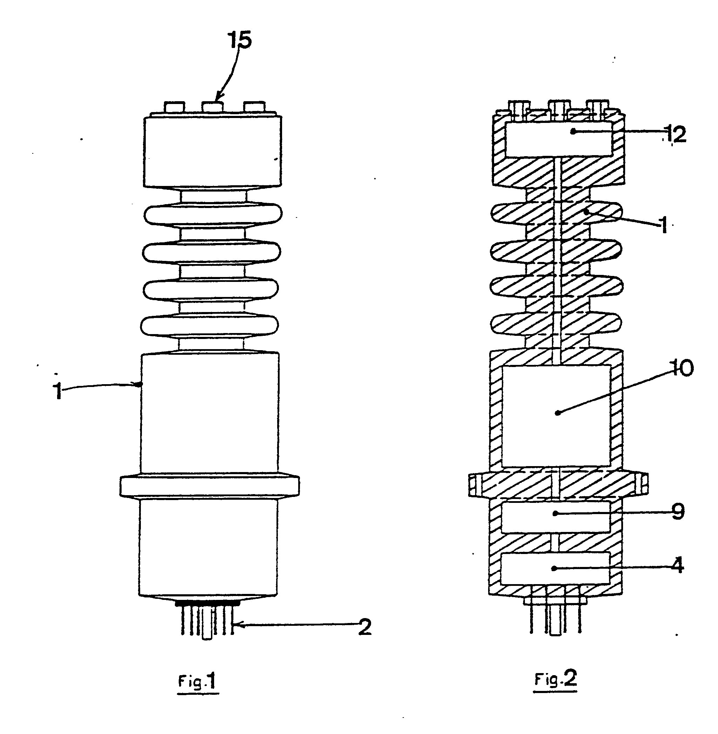

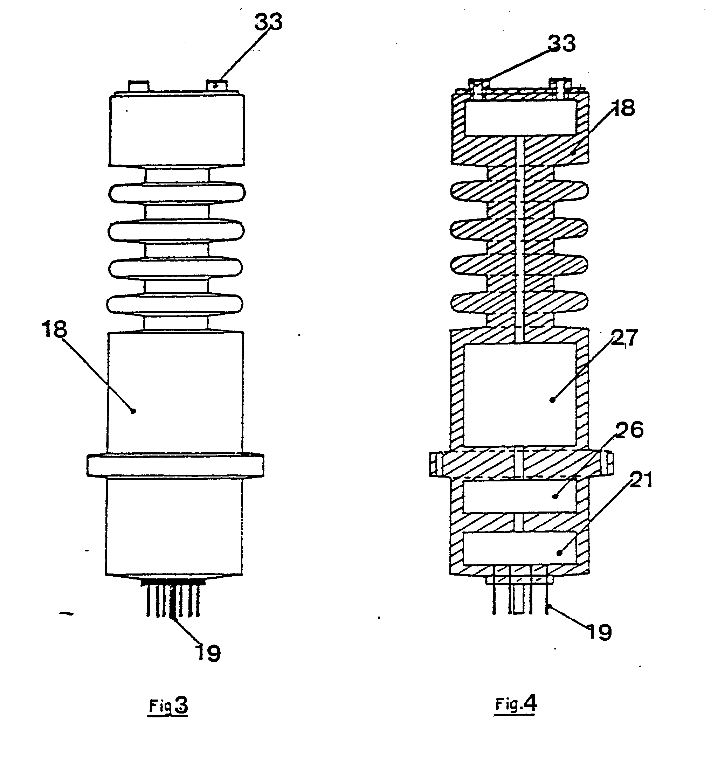

Les figures 1 à 6 illustrent le dispositif, objet de l'invention.

Les figures 1 à 4 montrent un mode de réalisation de l'émetteur (fig. 1 et 2) et du récepteur (fig. 3 et 4), entierement enrobés dans un bloc de résine synthétique moulée.

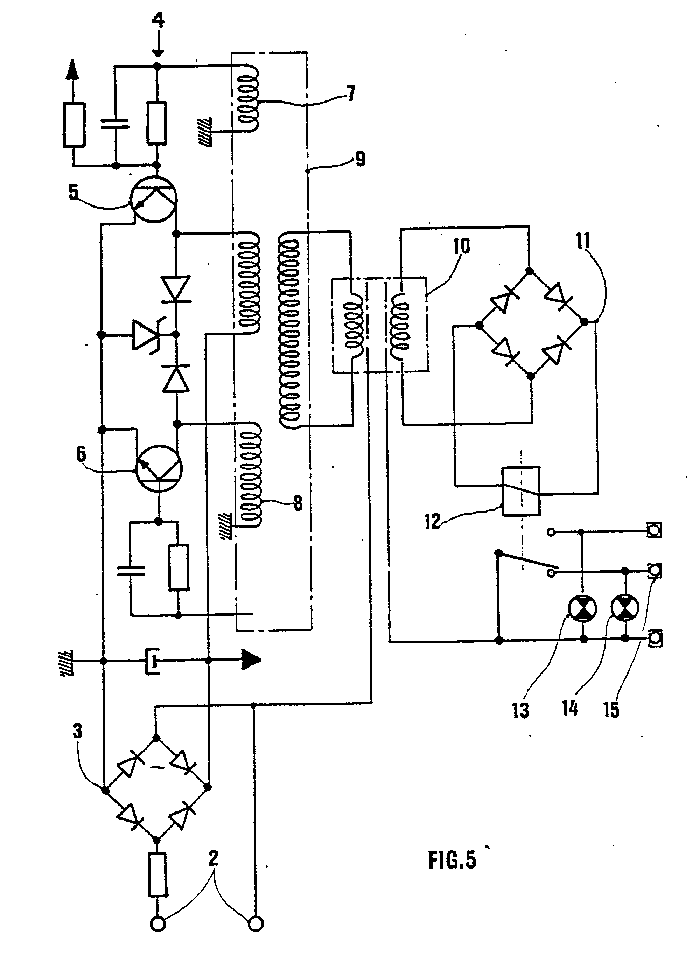

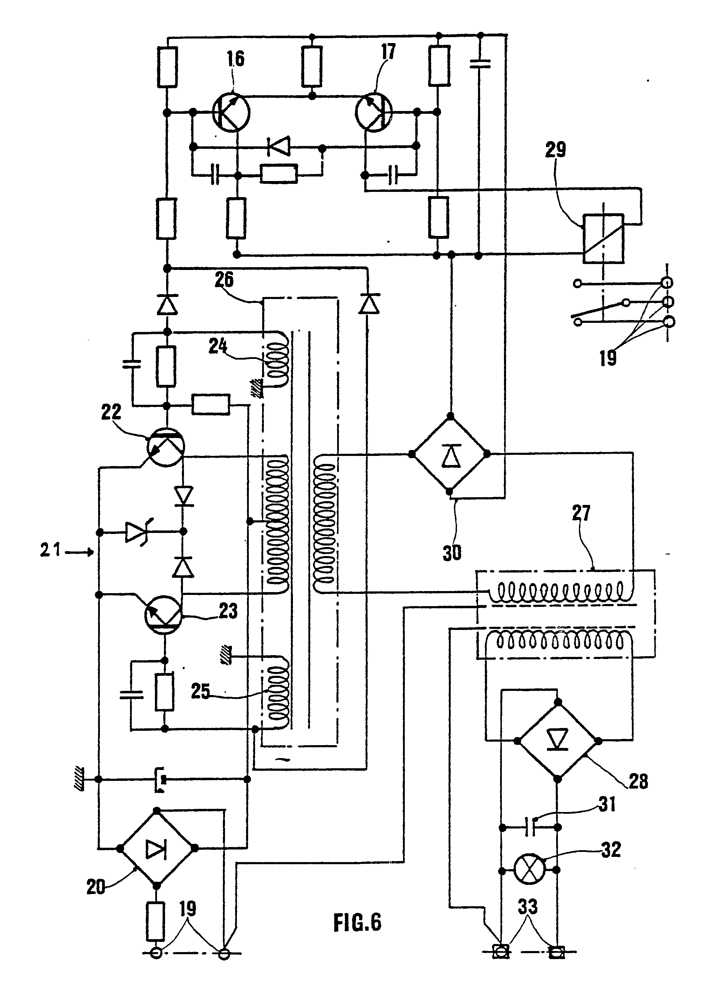

La figure 5 montre le schéma détaillé des circuits électriques de l'émetteur et la figure 6, les circuits du récepteur.

La présence d'un courant - de tension normale 24 ou 48 volts - redressé par les diodes 3 s'il est alternatif, à l'entrée 2 de l'émetteur, déclenche le fonctionnement d'un oscillateur 4 composé des transistors 5 et 6, et des enroulements 7 et 8 du transformateur 9. Cet oscillateur fournit une tension alternative de fréquence de 20 kilo-hertz qui alimente le transformateur à haut isolement 10.

Le pont redresseur 11 produit une tension continue, à partir de la tension alternative présente aux sorties du transformateur 10. Cette tension continue actionne le relais 12 dont le contact, protégé par les éclateurs 13 et 14, permet l'ouverture ou la mise en court-circuit de la ligne.

L'isolation de l'émetteur est obtenue par l'emploi de ferrite, dont les Propriétés isolantes sont connues pour la constructions du circuit magnétique d'un transformateur. D'autre part, l'ensemble de l'émetteur est inclus dans un bloc cylindrique de résine synthétique isolante, le matériau employé dans le mode de réalisation préféré de l'invention étant la résine époxyde.

Les risques de rampage du courant le long de l'isolant, entre les bornes d'entrée 2 et les bornes de sortie 15, sont évités par la longueur du cylindre, supérieure à la distance de rampage, les fils correspondants aux sorties du transformateur 10 étant prévus en conséquence.

Enfin, l'extérieur du cylindre est muni de gorges destinées à rallonger le chemin de rampage du courant.

Dans un autre mode de réalisation de l'invention, un transformateur à circuit ouvert peut être utilisé.

Dans ce cas, le circuit magnétique du transformateur 10 est remplacé par un batonnet de ferrite, sur lequel est bobiné le circuit primaire. Ce batonnet est ensuite placé dans un puits isolant - simple cylindre creux scellé à l'une de ses extrémités et réalisé en résine isolantequ'on remplit ensuite de résine, scellant l'autre extrémité.

Le circuit secondaire est ensuite bobiné autour de ce cylindre, concentriquement au circuit primaire.

Le courant disponible à la sortie du circuit secondaire n'est, dans ce mode de réalisation, pas suffisant pour actionner le relais 12.

La tension alternative présente aux bornes du circuit secondaire devra donc être redressée par une diode et un condensateur pour saturer la base d'un transistor, dont l'impédance devient alors très faible.

De même, l'oscillateur peut être remplacé par un générateur sinusoïdal.

Le récepteur 18 est similaire, par son aspect et par la plupart de ses éléments, à l'émetteur.

Il comporte un oscillateur 21 composé des transistors 22 et 23 et des enroulements 24 et 25, alimenté en permanence sous une tension de 24 ou 48 volts, redressée si nécessaire par les diodes 20, et un transformateur 26, identique au transformateur 9. Le transformateur d'isolement 27 est semblable dans sa conception - mais non dans sa fonction - au transformateur 10.

L'entrée 33 du récepteur, connectée au redresseur 28, est protégéepar l'éclateur parafoudre 32. Le redresseur 28 est relié aux sorties du circuit secondaire du transformateur 27.

La tension alternative présente aux sorties du transformateur 26 est appliquée à un circuit comprenant, dans un montage en série, le circuit primaire du transformateur 27, le pont redresseur 30 et un circuit de détection à seuil composé des transistors 16 et 17, dont la fonction est de commander le relais 29.

Lorsque le circuit secondaire du transformateur 27 est ouvert, l'impédance du circuit primaire est suffisamment élevée pour limiter le courant aux bornes du circuit à seuil. Le relais 29 n'est donc pas excité.

La mise en court-circuit de la ligne de transmission provoque la fermeture du circuit secondaire du transformateur 27. L'impédance de son circuit primaire décroît alors suffisamment pour que l'énergie fournie par ce circuit puisse actionner le relais 29

L'information transmise est disponible aux bornes de ce relais.

Le pont redresseur 28 et le condensateur 31 ont pour but d'empêcher que la capacité parasite de la ligne ne vienne court-circuiter le circuit secondaire du transformateur 27, et, d'autre part, éviter la perturbation d'autres installations qui pourrait être provoquée par le rayonnement électro-magnétique de la ligne.

L'isolation de l'ensemble du récepteur est obtenue selon les mêmes procédés que pour l'émetteur.

Le transformateur 27 peut être modifié de la même façon que le transformateur 10 de l'émetteur.

L'oscillateur du récepteur peut également être remplacé par un générateur de signaux sinusoïdaux.

En pratique, les deux ensembles, émetteur et récepteur, sont chacun inclus dans un bloc de résine synthétique isolante ayant l'aspect d'un cylindre 1 ou 18 muni extérieurement de gorges, de longueur suffisante pour eviter tout risque de rampage; la ligne de transmission étant connectée à une extrémité 15 ou 33 de ce cylindre, l'entrée ou la sortie de l'information s'effectuant à l'autre extrémité 2 ou 19.

Le dispositif ainsi réalisé est particulierement adapté à la sécurité des équipements de télécommande, notamment pour les téléphériques ou télécabines, qui ne peuvent être arrêtés durant leur utilisation, et qui, de ce fait, peuvent être frappés par la foudre, durant leur fonctionnement, avec tous les risques de destruction des installations de commandes que cela implique.

L'utilisation aux points de connections des lignes et les gares de départ et d'arrivée de l'émetteur et du récepteur, objet de l'invention, permettra d'épargner toutes les installations, en cas de foudroiement de la ligne ou d'une gare.

D'autres utilisations sont possibles, notamment la protection des accélérateurs ioniques.

## Revendications:

1. Dispositif de transmission d'informations binaires protégé contre les surtensions dues en particulier à la foudre, et comportant une ligne électrique de transmission d'information, un émetteur et un récepteur reliés à la ligne caractérisé en ce que: - l'émetteur est constitué par:un premier oscillateur (4) commandé par l'information binaire à transmettre, un premier transformateur d'isolement (10) dont le circuit primaire est alimenté par l'oscillateur (4), et un relais (12) alimenté par le circuit secondaire de ce Premier transformateur d'isolement (10) et dont un contact permet l'ouverture ou la mise en court-circuit de la ligne, en fonction de l'information linaire à transmettre; - le récepteur (18) comprend: un second transformateur d'isolement (27) dont le circuit secondaire est relié en série à la ligne de transmission, un second oscillateur (21) alimentant en permanence le circuit primaire du second transformateur d'isolement (27), et un circuit de détection de seuil de courant (16, 17) réagissant au courant dans le circuit primaire du second transformateur d'isolement (27) et commandant un relais (29), le second transformateur (27) ayant un couplage primaire-secondaire suffisant pour que l'impédance du circuit primaire varie quand la ligne reliée au circuit secondaire est court-circuitée.

2. Dispositif selon revendication 1, caractérisé en ce que les transformateurs (10 et 27) tant de l'émetteur que du récepteur, sont réalisés en ferrite pour améliorer l'isolation.

3. Dispositif selon revendication 1 ou 2, caractérisé en ce qu'une isolation supplémentaire est obtenue par l'inclusion du bobinage des circuits secondaires dans un bloc de résine synthétique isolante de façon telle qu'entre le bobinage et le noyau magnétique, l'épaisseur de résine synthétique assure une isolation de 100 000 volts.

4. Dispositif selon l'une quelconque des revendications 1 à 3, caractérisé en ce que le transformateur (27) du récepteur et le transformateur (10) de l'émetteur sont du type à circuit magnétique ouvert, constitué par un batonnet de ferrite, sur lequel est bobiné le circuit primaire placé au centre d'un cylindre creux réalisé en résine synthétique isolante, d'une épaisseur suffisante pour assurer une isolation de 100 000 V., le circuit secondaire étant bobiné à l'extérieur de ce cylindre, concentriquement au circuit primaire.

5. Dispositif selon l'une quelconque des revendications 1 à 4, caractérisé en ce que les transformateurs (10 et 27) tant de l'émetteur que du récepteur, sont chacun alimentés par une tension sinusoidale ou de forme carrée, fabriquée à partir d'une tension de 24 ou 48 volts par un oscillateur sinusoîdal ou un générateur de signaux carrés.

6. Dispositif selon l'une quelconque des revendications 1 à 4, caractérisé en ce que les deux ensembles, émetteur et récepteur, sont chacun inclus dans un bloc de résine synthétique isolante ayant l'aspect d'un cylindre (1 ou 18) muni extérieurement de gorges, de longueur suffisante pour éviter tout risque de rampage, la ligne de transmission étant connectée à une extrémité (15 ou 33) de ce cylindre, l'information à émettre ou reçue étant disponible à l'autre extrémité (2 ou 19) de ce cylindre.


**Patentansprüche**

1. Einrichtung zur Übertragung binärer Informationen, die gegen Überspannungen, insbesondere aufgrund Blitzeinwirkungen, geschützt ist und eine elektrische Informationsübertragungsleitung, einen Sender und einen Empfänger, die an die Leitung angeschlossen sind, aufweist,
   dadurch gekennzeichnet, daß
   - der Sender aufweist: einen ersten Oszillator (4), der von der zu übertragenden binären Information gesteuert wird, einen ersten Isoliertransformator (10), dessen Primärwicklung von dem Oszillator (4) gespeist wird, und einen Relais (12),der von der Sekundärwicklung dieses ersten Isoliertransformators (10) gespeist wird und dessen Kontakt das Öffnen oder das Kurzschließen der Leitung in Abhängigkeit von der zu übertragenden binären Information erlaubt,
   - und daß der Empfänger (18) aufweist: einen zweiten Isoliertransformator (27), dessen Sekundärwicklung in Reihe mit der Übertragungsleitung geschaltet ist, einen zweiten Oszillator (21), der permanent die Primärwicklung des zweiten Isoliertransformators (27) speist und eine Stromschwellenerfassungsschaltung (16, 17), die auf den in der Primärwicklung des zweiten Isoliertransformators (27) fließenden Strom reagiert und ein Relais (29) steuert, wobei der zweite Transformator (27) eine ausreichende Primär-Sekundär-Kopplung aufweist, um die Impedanz der Primärwicklung zu ändern, wenn die an die Sekundärwicklung geschaltete Leitung kurzgeschlossen ist.

2. Einrichtung nach Anspruch 1,
   dadurch gekennzeichnet, daß die Transformatoren (10, 27) sowohl des Senders als auch des Empfängers aus Ferrit gefertigt sind, um die Isolation zu verbessern.

3. Einrichtung nach Anspruch 1 oder 2,
   dadurch gekennzeichnet, daß eine zusätzliche Isolation erreicht wird durch den Ein-schluß der Sekundärwicklungen in einem Block aus isolierendem synthetischen Harz, derart, daß zwischen der Wicklung und dem magnetischen Kern die Dicke des synthetischen Harzes eine Isolation von 100.000 Volt bewirkt.

4. Einrichtung nach einem der Ansprüche 1 bis 3,
   dadurch gekennzeichnet, daß der Transformator (27) des Empfängers und der Transformator (10) des Senders vom Typ mit offenem magnetischen Kreis sind, die einen Ferritstab aufweisen, auf denen die Primärwicklung aufgewickelt ist, die in der Mitte eines Hohlzylinders plaziert ist, der aus isolierendem synthetischem Harz besteht, das eine ausreichende Dicke aufweist, um eine Isolation von 100.000 Volt sicherzustellen, wobei die Sekundärwicklung außen auf dem Zylinder konzentrisch zur Primärwicklung aufgewickelt ist.

5. Einrichtung nach einem der Ansprüche 1 bis 4,
   dadurch gekennzeichnet, daß die Transformatoren (10 und 27) sowohl des Senders als auch des Empfängers jeweils mit einer sinusförmigen Spannung oder einer Rechteckspannung gespeist werden, die ausgehend von einer Spannung von 24 oder 48 Volt durch einen Sinusoszillator oder einen Rechtecksignalgenerator erzeugt werden.

6. Einrichtung nach einem der Ansprüche 1 bis 4,
   dadurch gekennzeichnet, daß die beiden Einheiten Sender und Empfänger jeweils in einen Block aus isolierendem synthetischem Harz eingeschlossen sind, der zylinderförmig (1 oder 18) ist und an seiner Außenseite mit Nuten versehen ist, die ausreichend lang sind, um jedes Risiko einer Rampage zu verhindern, wobei die Übertragungsleitung an ein Ende (15 oder 33) dieses Zylinders angeschlossen ist und die auszusendende Information oder die empfangene Information am anderen Ende (2 oder 19) dieses Zylinders verfügbar ist.


**Claims:**

1. A device for transmitting binary information, protected against overvoltages, particularly thos due to lightning, and com prising an electric line for information transmission, a transmitter and a receiver connected to the line, characterised in that:
- the transmitter is made up of a first oscillator (4) controlled by the binary information to be transmitted, a first insulation transformer (10), the primary circuit of which is supplied by the oscillator (4), and a relay (12) supplied by the secondary circuit of this first insulation transformer (10) and a contact of which allows the line to be opened or to be short-circuited according to the binary information to be transmitted;
- the receiver (18) comprises a second insulation transformer (27), the secondary circuit of which is connected in series with the transmission line, a second oscillator (21) permanently supplying the primary circuit of the second insulation transformer (27), and a circuit detecting the threshold of the current (16,17) reacting to the current in the primary circuit of the second insulation transformer (27) and controlling a relay (29), the second transformer (27) having a primary-second coupling which is sufficient for the primary circuit impedance to vary when the line connected to the secondary circuit is short-circuited.

2. A device according to claim 1, characterised in that the transformers (10 and 27) both of the transmitter and of the receiver are made of ferrite to improve insulation.

3. A device according to claim 1 or 2, characterised in that an additional insulation is obtained by incorporating the coil of the secondary circuits in a block of insulating synthetic resin, in such a manner that the thickness of the synthetic resin ensures an insulation of 100 000 volts between the coil and the magnetic core.

4. A device according to one of claims 1 to 3, characterised in that the transformer (27) of the receiver and the transformer (10) of the transmitter are of the open magnetic circuit type, consisting of a ferrite rod, on which is coiled the primary circuit, placed at the centre of a hollow cylinder made of insulating synthetic resin, of a thickness which is sufficient to ensure an insulation of 100 000 volts, the secondary circuit being coiled around the exterior of the cylinder, concentrically to the primary circuit.

5. A device according to one of claims 1 to 4, characterised in that the transformers (10 and 27) both of the transmitter and of the receiver, are each supplied by a sinusoidal or square-form voltage, produced from a voltage of 24 or 48 volts by a sinusoidal oscillator or a square-form signal generator.

6. A device according to one of claims 1 to 4, characterised in that the two assemblies, transmitter and receiver, are each incorporated in a cylindrical block of insulating synthetic resin (1 or 18) provided on the outside with grooves which are sufficiently long to avoid all risk of creeping, the transmission line being connected at one end (15 or 33) of this cylinder, and the information to be transmitted or received being available at the other end (2 or 19) of this cylinder.

Fig.1

Fig.2

Fig.3

Fig.4

0 104 193

FIG.5

5

0 104 193

FIG.6

7